# EUROPEAN PATENT APPLICATION

(11) **EP 4 617 955 A1**
(43) Date of publication of application: **17.09.2025**
(21) Application number: 24163030.0
(22) Date of filing: 12.03.2024
(51) Int. Cl.: G06N 3/08, G06N 20/00, H04W 24/10, H04W 64/00

(54) **MONITORING PERFORMANCE OF MACHINE LEARNING MODEL IN WIRELESS USER EQUIPMENT**

(71) Applicant: Nokia Technologies Oy, 02610 Espoo (FI)
(72) Inventor: MALAPATI RAVINDRAIAH, Deepa, 560085 Bangalore (IN); BARBU, Oana-Elena, 9220 Aalborg (DK); MELGAREJO, Dick Carrillo, 53850 Lappeenranta (FI)
(74) Representative: Page White Farrer

(57) **Abstract**

A user equipment comprising: means for sending, to a network entity, an indication that the user equipment is capable of monitoring, during a radio resource control inactive state, performance of at least one of: a machine learning model used to infer a position of the user equipment or a machine learning functionality used to infer a position of the user equipment; means for receiving, from the network entity, a configuration for the user equipment to monitor, during the radio resource control inactive state, the performance of the at least one of: the machine learning model or the machine learning functionality; means for monitoring, based on the received configuration, the performance of the at least one of: the machine learning model or the machine learning functionality; means for sending, to the network entity, during the radio resource control inactive state, information indicative of the monitored performance of the at least one of: the machine learning model or the machine learning functionality.

## Description

### TECHNICAL FIELD

This disclosure relates to methods, an apparatus and computer programs, and in particular - but not exclusively - to methods, apparatus and computer programs relating to providing monitoring the performance of Artificial Learning (Al) and/or Machine Learning (ML) models.

### BACKGROUND

A communication network can be seen as a facility that enables communications between two or more communication devices, or provides communication devices access to a data network. A mobile or wireless communication network is one example of a communication network. A communication device may be provided with a service by an application server.

Such communication networks operate in according with standards such as those provided by 3GPP (Third Generation Partnership Project) or ETSI (European Telecommunications Standards Institute). Examples of standards are the so-called 4G (4^{th} Generation), 5G (5th Generation) standards provided by 3GPP.

### SUMMARY

Some example embodiments of this disclosure will be described with respect to certain aspects. These aspects are not intended to indicate key or essential features of the embodiments of this disclosure, nor are they intended to be used to limit the scope of thereof. Other features, aspects, and elements will be readily apparent to a person skilled in the art in view of this disclosure.

According to a first aspect there is provided a user equipment comprising: means for sending, to a network entity, an indication that the user equipment is capable of monitoring, during a radio resource control inactive state, performance of at least one of: a machine learning model used to infer a position of the user equipment or a machine learning functionality used to infer a position of the user equipment; means for receiving, from the network entity, a configuration for the user equipment to monitor, during the radio resource control inactive state, the performance of the at least one of: the machine learning model or the machine learning functionality; means for monitoring, based on the received configuration, the performance of the at least one of: the machine learning model or the machine learning functionality; means for sending, to the network entity, during the radio resource control inactive state, information indicative of the monitored performance of the at least one of: the machine learning model or the machine learning functionality.

According to some examples, the information indicative of the monitoring is sent to the network entity using a small data transmission procedure.

According to some examples, the information indicative of the monitoring comprises at least one of: an indication that the performance of the at least one of: the machine learning model or the machine learning functionality is below a threshold level; or an indication that at least one input and a training data set for the at least one of the machine learning model or the machine learning functionality have a deviation level above a threshold deviation level.

According to some examples, the information indicative of the monitoring comprises a monitoring metric for determining, at the network entity, whether the performance of the at least one of: the machine learning model or the machine learning functionality is above or below a threshold level.

According to some examples, wherein the configuration comprises a periodicity for sending the information indicative of the monitoring to the network entity, and wherein the information indicative of the monitoring is sent to the network entity based on the periodicity.

According to some examples, the means for monitoring the performance of the at least one of: the machine learning model or the machine learning functionality comprises: means for measuring at least one downlink positioning reference signal, PRS, to generate at least one positioning measurement of the user equipment; means for comparing an output of the at least one of: the machine learning model or the machine learning functionality to the at least positioning measurement of the user equipment to determine the information indicative of the monitoring.

According to some examples, wherein the configuration comprises at least one of: a time window for measuring the at least one downlink PRS; or one or more identifiers of the at least one downlink PRS.

According to some examples, the configuration comprises at least one of: at least one identifier of the at least one of: the machine learning model or the machine learning functionality to be monitored; or at least one condition for determining an outcome for the monitoring.

According to some examples, the configuration comprises at least one of: a number of transmit receive points to use at the user equipment while monitoring the performance of the at least one of: the machine learning model or the machine learning functionality; or a type of positioning model to be used by the user equipment while monitoring the performance of the at least one of: the machine learning model or the machine learning functionality.

According to some examples, configuration comprises: an indication of a periodicity for sending the information indicative of the monitoring; an indication to send the information indicative of the monitoring in response to the performance of the at least one of: the machine learning model or the machine learning functionality is below a threshold level; or an indication to send the information indicative of the monitoring in response to the performance of the at least one of: the machine learning model or the machine learning functionality is above a threshold level.

According to some examples, the information indicative of the monitored performance is sent in a message, wherein the message is shorter than or equal to the maximum allowed message length for uplink small data transmission.

According to some examples, the information indicative of the monitored performance of the at least one of the machine learning model or the machine learning functionality comprises at least one of: a timestamp of a downlink positioning reference signal, PRS; or a downlink PRS with a corresponding functionality identifier.

According to some examples, the information indicative of the monitored performance is used to train a second machine learning model.

According to a second aspect, there is provided an apparatus comprising at least one processor and at least one memory storing instructions that, when executed by the at least one processor, cause the apparatus at least to perform: sending, to a network entity, an indication that the user equipment is capable of monitoring, during a radio resource control inactive state, performance of at least one of: a machine learning model used to infer a position of the user equipment or a machine learning functionality used to infer a position of the user equipment; receiving, from the network entity, a configuration for the user equipment to monitor, during the radio resource control inactive state, the performance of the at least one of: the machine learning model or the machine learning functionality; monitoring, based on the received configuration, the performance of the at least one of: the machine learning model or the machine learning functionality; sending, to the network entity, during the radio resource control inactive state, information indicative of the monitored performance of the at least one of: the machine learning model or the machine learning functionality.

According to some examples, the information indicative of the monitoring is sent to the network entity using a small data transmission procedure.

According to some examples, the information indicative of the monitoring comprises at least one of: an indication that the performance of the at least one of: the machine learning model or the machine learning functionality is below a threshold level; or an indication that at least one input and a training data set for the at least one of the machine learning model or the machine learning functionality have a deviation level above a threshold deviation level.

According to some examples, the information indicative of the monitoring comprises a monitoring metric for determining, at the network entity, whether the performance of the at least one of: the machine learning model or the machine learning functionality is above or below a threshold level.

According to some examples, wherein the configuration comprises a periodicity for sending the information indicative of the monitoring to the network entity, and wherein the information indicative of the monitoring is sent to the network entity based on the periodicity.

According to some examples, monitoring the performance of the at least one of: the machine learning model or the machine learning functionality comprises: measuring at least one downlink positioning reference signal, PRS, to generate at least one positioning measurement of the user equipment; comparing an output of the at least one of: the machine learning model or the machine learning functionality to the at least positioning measurement of the user equipment to determine the information indicative of the monitoring.

According to some examples, wherein the configuration comprises at least one of: a time window for measuring the at least one downlink PRS; or one or more identifiers of the at least one downlink PRS.

According to some examples, the configuration comprises at least one of: at least one identifier of the at least one of: the machine learning model or the machine learning functionality to be monitored; or at least one condition for determining an outcome for the monitoring.

According to some examples, the configuration comprises at least one of: a number of transmit receive points to use at the user equipment while monitoring the performance of the at least one of: the machine learning model or the machine learning functionality; or a type of positioning model to be used by the user equipment while monitoring the performance of the at least one of: the machine learning model or the machine learning functionality.

According to some examples, configuration comprises: an indication of a periodicity for sending the information indicative of the monitoring; an indication to send the information indicative of the monitoring in response to the performance of the at least one of: the machine learning model or the machine learning functionality is below a threshold level; or an indication to send the information indicative of the monitoring in response to the performance of the at least one of: the machine learning model or the machine learning functionality is above a threshold level.

According to some examples, the information indicative of the monitored performance is sent in a message, wherein the message is shorter than or equal to the maximum allowed message length for uplink small data transmission.

According to some examples, the information indicative of the monitored performance of the at least one of the machine learning model or the machine learning functionality comprises at least one of: a timestamp of a downlink positioning reference signal, PRS; or a downlink PRS with a corresponding functionality identifier.

According to some examples, the information indicative of the monitored performance is used to train a second machine learning model.

According to a third aspect there is provided a method comprising: sending, from a user equipment to a network entity, an indication that the user equipment is capable of monitoring, during a radio resource control inactive state, performance of at least one of: a machine learning model used to infer a position of the user equipment or a machine learning functionality used to infer a position of the user equipment; receiving, from the network entity, a configuration for the user equipment to monitor, during the radio resource control inactive state, the performance of the at least one of: the machine learning model or the machine learning functionality; monitoring, based on the received configuration, the performance of the at least one of: the machine learning model or the machine learning functionality; sending, to the network entity, during the radio resource control inactive state, information indicative of the monitored performance of the at least one of: the machine learning model or the machine learning functionality.

According to some examples, the information indicative of the monitoring is sent to the network entity using a small data transmission procedure.

According to some examples, the information indicative of the monitoring comprises at least one of: an indication that the performance of the at least one of: the machine learning model or the machine learning functionality is below a threshold level; or an indication that at least one input and a training data set for the at least one of the machine learning model or the machine learning functionality have a deviation level above a threshold deviation level.

According to some examples, the information indicative of the monitoring comprises a monitoring metric for determining, at the network entity, whether the performance of the at least one of: the machine learning model or the machine learning functionality is above or below a threshold level.

According to some examples, wherein the configuration comprises a periodicity for sending the information indicative of the monitoring to the network entity, and wherein the information indicative of the monitoring is sent to the network entity based on the periodicity.

According to some examples, monitoring the performance of the at least one of: the machine learning model or the machine learning functionality comprises: measuring at least one downlink positioning reference signal, PRS, to generate at least one positioning measurement of the user equipment; comparing an output of the at least one of: the machine learning model or the machine learning functionality to the at least positioning measurement of the user equipment to determine the information indicative of the monitoring.

According to some examples, wherein the configuration comprises at least one of: a time window for measuring the at least one downlink PRS; or one or more identifiers of the at least one downlink PRS.

According to some examples, the configuration comprises at least one of: at least one identifier of the at least one of: the machine learning model or the machine learning functionality to be monitored; or at least one condition for determining an outcome for the monitoring.

According to some examples, the configuration comprises at least one of: a number of transmit receive points to use at the user equipment while monitoring the performance of the at least one of: the machine learning model or the machine learning functionality; or a type of positioning model to be used by the user equipment while monitoring the performance of the at least one of: the machine learning model or the machine learning functionality.

According to some examples, configuration comprises: an indication of a periodicity for sending the information indicative of the monitoring; an indication to send the information indicative of the monitoring in response to the performance of the at least one of: the machine learning model or the machine learning functionality is below a threshold level; or an indication to send the information indicative of the monitoring in response to the performance of the at least one of: the machine learning model or the machine learning functionality is above a threshold level.

According to some examples, the information indicative of the monitored performance is sent in a message, wherein the message is shorter than or equal to the maximum allowed message length for uplink small data transmission.

According to some examples, the information indicative of the monitored performance of the at least one of the machine learning model or the machine learning functionality comprises at least one of: a timestamp of a downlink positioning reference signal, PRS; or a downlink PRS with a corresponding functionality identifier.

According to some examples, the information indicative of the monitored performance is used to train a second machine learning model.

According to a fourth aspect there is provided a computer readable medium comprising instructions which, when executed by a user equipment, cause the user equipment to perform at least the following: sending, from a user equipment to a network entity, an indication that the user equipment is capable of monitoring, during a radio resource control inactive state, performance of at least one of: a machine learning model used to infer a position of the user equipment or a machine learning functionality used to infer a position of the user equipment; receiving, from the network entity, a configuration for the user equipment to monitor, during the radio resource control inactive state, the performance of the at least one of: the machine learning model or the machine learning functionality; monitoring, based on the received configuration, the performance of the at least one of: the machine learning model or the machine learning functionality; sending, to the network entity, during the radio resource control inactive state, information indicative of the monitored performance of the at least one of: the machine learning model or the machine learning functionality.

According to a fifth aspect, there is provided a non-transitory computer readable medium comprising program instructions that, when executed by a user equipment, cause the user equipment to perform at least the following: sending, from a user equipment to a network entity, an indication that the user equipment is capable of monitoring, during a radio resource control inactive state, performance of at least one of: a machine learning model used to infer a position of the user equipment or a machine learning functionality used to infer a position of the user equipment; receiving, from the network entity, a configuration for the user equipment to monitor, during the radio resource control inactive state, the performance of the at least one of: the machine learning model or the machine learning functionality; monitoring, based on the received configuration, the performance of the at least one of: the machine learning model or the machine learning functionality; sending, to the network entity, during the radio resource control inactive state, information indicative of the monitored performance of the at least one of: the machine learning model or the machine learning functionality.

According to a sixth aspect there is provided an apparatus comprising: means for receiving, from a user equipment, an indication that the user equipment is capable of monitoring, during a radio resource control inactive state, performance of at least one of: a machine learning model used to infer a position of the user equipment or a machine learning functionality used to infer a position of the user equipment; means for sending, to the user equipment, a configuration for the user equipment to monitor, during the radio resource control inactive state, the performance of the at least one of: the machine learning model or the machine learning functionality; means for receiving, from the user equipment and during the radio resource control inactive state, information indicative of the monitored performance of the at least one of: the machine learning model or the machine learning functionality.

According to some examples, the information indicative of the monitoring is sent to the apparatus using a small data transmission procedure.

According to some examples, the information indicative of the monitoring comprises at least one of: an indication that the performance of the at least one of: the machine learning model or the machine learning functionality is below a threshold level; or an indication that at least one input and a training data set for the at least one of the machine learning model or the machine learning functionality have a deviation level above a threshold deviation level.

According to some examples, the information indicative of the monitoring comprises a monitoring metric for determining, at the apparatus, whether the performance of the at least one of: the machine learning model or the machine learning functionality is above or below a threshold level, wherein the apparatus comprises means for determining, based on the monitoring metric, the performance of the at least one of: the machine learning model or the machine learning functionality.

According to some examples, the configuration comprises a periodicity for sending the information indicative of the monitoring from the user equipment to the apparatus, and wherein the information indicative of the monitoring is sent from the user equipment to the apparatus based on the periodicity.

According to some examples, the configuration comprises at least one of: a time window for measuring the at least one downlink PRS; or one or more identifiers of the at least one downlink PRS.

According to some examples, the configuration comprises at least one of: at least one identifier of the at least one of: the machine learning model or the machine learning functionality to be monitored; or at least one condition for determining an outcome for the monitoring.

According to some examples, the configuration comprises at least one of: a number of transmit receive points to use at the user equipment while monitoring the performance of the at least one of: the machine learning model or the machine learning functionality; or a type of positioning model to be used at the user equipment while monitoring the performance of the at least one of: the machine learning model or the machine learning functionality.

According to some examples, the configuration comprises at least one of: an indication of a periodicity for sending the information indicative of the monitoring; an indication to send the information indicative of the monitoring in response to the performance of the at least one of: the machine learning model or the machine learning functionality is below a threshold level; or an indication to send the information indicative of the monitoring in response to the performance of the at least one of: the machine learning model or the machine learning functionality is above a threshold level.

According to some examples, the information indicative of the monitored performance is received in a message, wherein the message is shorter than or equal to the maximum allowed message length for uplink small data transmission.

According to some examples, the information indicative of the monitored performance of the at least one of the machine learning model or the machine learning functionality comprises at least one of: a timestamp of a downlink positioning reference signal, PRS; or a downlink PRS with a corresponding functionality identifier.

According to some examples, the information indicative of the monitored performance is used to train a second machine learning model.

According to a seventh aspect, there is provided an apparatus comprising at least one processor and at least one memory storing instructions that, when executed by the at least one processor, cause the apparatus at least to perform: receiving, from a user equipment, an indication that the user equipment is capable of monitoring, during a radio resource control inactive state, performance of at least one of: a machine learning model used to infer a position of the user equipment or a machine learning functionality used to infer a position of the user equipment; sending, to the user equipment, a configuration for the user equipment to monitor, during the radio resource control inactive state, the performance of the at least one of: the machine learning model or the machine learning functionality; receiving, from the user equipment and during the radio resource control inactive state, information indicative of the monitored performance of the at least one of: the machine learning model or the machine learning functionality.

According to some examples, the information indicative of the monitoring is sent to the apparatus using a small data transmission procedure.

According to some examples, the information indicative of the monitoring comprises at least one of: an indication that the performance of the at least one of: the machine learning model or the machine learning functionality is below a threshold level; or an indication that at least one input and a training data set for the at least one of the machine learning model or the machine learning functionality have a deviation level above a threshold deviation level.

According to some examples, the information indicative of the monitoring comprises a monitoring metric for determining, at the apparatus, whether the performance of the at least one of: the machine learning model or the machine learning functionality is above or below a threshold level, and the at least one processor and at least one memory storing instructions cause, when executed by the at least one processor, the apparatus at least to perform:: determining, based on the monitoring metric, the performance of the at least one of: the machine learning model or the machine learning functionality

According to some examples, the configuration comprises a periodicity for sending the information indicative of the monitoring from the user equipment to the apparatus, and wherein the information indicative of the monitoring is sent from the user equipment to the apparatus based on the periodicity.

According to some examples, the configuration comprises at least one of: a time window for measuring the at least one downlink PRS; or one or more identifiers of the at least one downlink PRS.

According to some examples, the configuration comprises at least one of: at least one identifier of the at least one of: the machine learning model or the machine learning functionality to be monitored; or at least one condition for determining an outcome for the monitoring.

According to some examples, the configuration comprises at least one of: a number of transmit receive points to use at the user equipment while monitoring the performance of the at least one of: the machine learning model or the machine learning functionality; or a type of positioning model to be used at the user equipment while monitoring the performance of the at least one of: the machine learning model or the machine learning functionality.

According to some examples, the configuration comprises at least one of: an indication of a periodicity for sending the information indicative of the monitoring; an indication to send the information indicative of the monitoring in response to the performance of the at least one of: the machine learning model or the machine learning functionality is below a threshold level; or an indication to send the information indicative of the monitoring in response to the performance of the at least one of: the machine learning model or the machine learning functionality is above a threshold level.

According to some examples, the information indicative of the monitored performance is received in a message, wherein the message is shorter than or equal to the maximum allowed message length for uplink small data transmission.

According to some examples, the information indicative of the monitored performance of the at least one of the machine learning model or the machine learning functionality comprises at least one of: a timestamp of a downlink positioning reference signal, PRS; or a downlink PRS with a corresponding functionality identifier.

According to some examples, the information indicative of the monitored performance is used to train a second machine learning model.

According to an eighth aspect there is provided a method comprising: receiving, from a user equipment, an indication that the user equipment is capable of monitoring, during a radio resource control inactive state, performance of at least one of: a machine learning model used to infer a position of the user equipment or a machine learning functionality used to infer a position of the user equipment; sending, to the user equipment, a configuration for the user equipment to monitor, during the radio resource control inactive state, the performance of the at least one of: the machine learning model or the machine learning functionality; receiving, from the user equipment and during the radio resource control inactive state, information indicative of the monitored performance of the at least one of: the machine learning model or the machine learning functionality.

According to some examples, the method comprises: the information indicative of the monitoring is sent to the apparatus using a small data transmission procedure.

According to some examples, the information indicative of the monitoring comprises at least one of: an indication that the performance of the at least one of: the machine learning model or the machine learning functionality is below a threshold level; or an indication that at least one input and a training data set for the at least one of the machine learning model or the machine learning functionality have a deviation level above a threshold deviation level.

According to some examples, the information indicative of the monitoring comprises a monitoring metric for determining, at the apparatus, whether the performance of the at least one of: the machine learning model or the machine learning functionality is above or below a threshold level, and the method comprises: determining, based on the monitoring metric, the performance of the at least one of: the machine learning model or the machine learning functionality

According to some examples, the configuration comprises a periodicity for sending the information indicative of the monitoring from the user equipment to the apparatus, and wherein the information indicative of the monitoring is sent from the user equipment to the apparatus based on the periodicity.

According to some examples, the configuration comprises at least one of: a time window for measuring the at least one downlink PRS; or one or more identifiers of the at least one downlink PRS.

According to some examples, the configuration comprises at least one of: at least one identifier of the at least one of: the machine learning model or the machine learning functionality to be monitored; or at least one condition for determining an outcome for the monitoring.

According to some examples, the configuration comprises at least one of: a number of transmit receive points to use at the user equipment while monitoring the performance of the at least one of: the machine learning model or the machine learning functionality; or a type of positioning model to be used at the user equipment while monitoring the performance of the at least one of: the machine learning model or the machine learning functionality.

According to some examples, the configuration comprises at least one of: an indication of a periodicity for sending the information indicative of the monitoring; an indication to send the information indicative of the monitoring in response to the performance of the at least one of: the machine learning model or the machine learning functionality is below a threshold level; or an indication to send the information indicative of the monitoring in response to the performance of the at least one of: the machine learning model or the machine learning functionality is above a threshold level.

According to some examples, the information indicative of the monitored performance is received in a message, wherein the message is shorter than or equal to the maximum allowed message length for uplink small data transmission.

According to some examples, the information indicative of the monitored performance of the at least one of the machine learning model or the machine learning functionality comprises at least one of: a timestamp of a downlink positioning reference signal, PRS; or a downlink PRS with a corresponding functionality identifier.

According to some examples, the information indicative of the monitored performance is used to train a second machine learning model.

According to a ninth aspect there is provided a computer readable medium comprising instructions which, when executed by an apparatus, cause the apparatus to perform at least the following: receiving, from a user equipment, an indication that the user equipment is capable of monitoring, during a radio resource control inactive state, performance of at least one of: a machine learning model used to infer a position of the user equipment or a machine learning functionality used to infer a position of the user equipment; sending, to the user equipment, a configuration for the user equipment to monitor, during the radio resource control inactive state, the performance of the at least one of: the machine learning model or the machine learning functionality; receiving, from the user equipment and during the radio resource control inactive state, information indicative of the monitored performance of the at least one of: the machine learning model or the machine learning functionality.

According to a tenth aspect, there is provided a non-transitory computer readable medium comprising program instructions that, when executed by an apparatus, cause the apparatus to perform at least the following: receiving, from a user equipment, an indication that the user equipment is capable of monitoring, during a radio resource control inactive state, performance of at least one of: a machine learning model used to infer a position of the user equipment or a machine learning functionality used to infer a position of the user equipment; sending, to the user equipment, a configuration for the user equipment to monitor, during the radio resource control inactive state, the performance of the at least one of: the machine learning model or the machine learning functionality; receiving, from the user equipment and during the radio resource control inactive state, information indicative of the monitored performance of the at least one of: the machine learning model or the machine learning functionality.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

In the above, many different embodiments have been described. It should be appreciated that further embodiments may be provided by the combination of any two or more of the embodiments described above.

### DESCRIPTION OF FIGURES

Some example embodiments will now be described, by way of non-limiting and illustrative example only, with reference to the accompanying Figures in which:
FIG. 1 shows a representation of a communication network comprising a 5^{th} generation communication network;
FIG. 2 shows an example message flow;
FIG. 3A shows an example method performed by a User Equipment;
FIG. 3B shows an example method performed by a Location Management Function
FIG. 4 shows a representation of an apparatus for the communication system of FIG. 1 according to some example embodiments;
FIG. 5 shows a representation of an apparatus according to some example embodiments; and
FIG. 6 shows a schematic representation of a non-volatile memory medium storing instructions which when executed by a processor allow a processor to perform one or more of the steps of the methods disclosed herein.

### DETAILED DESCRIPTION

AI/ML positioning can be used to determine the position of a device in a network. In real deployment scenarios, AI/ML models and/or AI/ML functionality require maintenance, i.e., the User Equipment (UE) being located and/or the network (NW) must ensure that the AI/ML model or functionality works as expected after it has been deployed in the field. AI/ML models or AI/ML functionalities may underperform, for example, if:
- The UE moves to an area for which the functionality does not contain any trained models.
- The UE moves to an area for which the functionality does not contain trained models that match with the NW additional conditions (e.g., dataset related to that specific area).
- The channel and interference conditions are too poor to run said functionality, etc.

Such a maintenance procedure has been referred to in RAN discussions as: model validation, performance monitoring, lifecycle management, consistency check, etc.

Some examples described herein enable provide AI/ML model or functionality monitoring after deployment is not straightforward. Some examples enable the UE to perform measurement collection for the AI/ML model or functionality monitoring. The UE may run the AI/ML model(s) associated with the AI/ML model or functionality. The UE may also be granted resources to report the outcome of the monitoring and transmit the outcome.

According to some examples, provisions for Radio Resource Control (RRC) inactive positioning measurements are used. These can be used if the UE reports to the NW that the UE is capable of Positioning Reference Signal (PRS) measurements in an RRC inactive state of the UE.

According to some examples, an UE in a RRC inactive state may use Uplink (UL) Small Data Transmission (SDT) to send data to the NW(e.g., New Radio (NR) NW) without being required to transition to RRC connected.

According to some examples, performance monitoring may comprise a procedure that monitors the inference performance of an AI/ML functionality or AI/ML model.

According to some examples, UE-side monitoring may comprise performing a monitoring metric calculation performed at the UE-side and collecting measurements (e.g.,, Downlink Positioning Reference Signal, DL-PRS) used to calculate the monitoring metric at the UE. A monitoring decision may be performed at the UE. For example, drift monitoring may be performed using a model input (e.g., Reference Signals Received Power, RSRP) which can be used to check if the model input is similar enough (in statistical manner) to the used training data set to reach the expected model inference accuracy. If there is deviation above a deviation threshold when compared to the training data set, this indicates that the model inference may degrade. If the deviation (i.e. drift) is beyond a threshold provided to the UE by the LMF, a monitoring action may be triggered at the UE based on the LMF configuration.

According to some examples, UE-side assisted monitoring may be performed, where the monitoring metric calculation is performed at the UE and the measurements used to calculate the monitoring metric are collected at the UE. The UE may report the monitoring metric to LMF and the monitoring decision is performed at the LMF. For example, in the case of drift monitoring, the UE may report the deviation in the model input to LMF and LMF may take appropriate action to overcome the degradation of the UE side model.

According to some examples, a UE reports to a network entity (e.g., an LMF) that the UE supports performing DL-PRS measurements while in an RRC_INACTIVE state. In addition (either in the same message or in a separate message), the UE reports to the LMF if it supports functionality monitoring in an RRC_INACTIVE states, wherein functionality monitoring comprises:
- DL PRS measurement collection
- Running the one or more AI/ML models related to the monitored functionality
- Obtaining the outcome of running the model to provide information indicative of the monitoring.

According to some examples, the UE may send the information indicative of the monitoring to the LMF (e.g., in an Information Element (IE) or LTE Positioning Protocol (LPP) message). The information indicative of the monitoring may comprise at least one of: an indication that the performance of the at least one of: the machine learning model or the machine learning functionality is below a threshold level; or an indication that at least one input and a training data set for the at least one of the machine learning model or the machine learning functionality have a deviation level above a threshold deviation level. In other examples, the information indicative of the monitoring comprises a monitoring metric for determining, at the network entity, whether the performance of the at least one of: the machine learning model or the machine learning functionality is above or below a threshold level. The information indicative of the monitoring may be sent from UE to LMF using a SDT procedure. In some examples, the information indicative may be sent in a message that is shorter than or equal to the maximum allowed message length for uplink small data transmission.

According to some examples, when the LMF receives the capability report, the LMF may configure an operation mode for the UE in an RRC_INACTIVE state. The configuration may comprise at least one of:
- Maximum observation window for collecting DL-PRS for functionality monitoring;
- PRS instances which should be used for functionality monitoring (e.g. identified by one or more identifiers);
- Functionality IDs to be monitored or IDs of the parts of a given functionality to be monitored;
- A list of one or more conditional aspects to test the outcome of running the functionality selected for monitoring. Such conditions may refer to an NW selected threshold, or to a comparison of the current outcome and any other past outcome;
- The model/ functionality configuration (like number of TRPs, the positioning method to be used etc.,) for each functionality/ model that needs to be monitored in RRC_INACTIVE state. This configuration can be same or different from the configuration for RRC_CONNECTED state;
- NW additional conditions related to the dataset used for training in that specific area to facilitate the monitoring;
- periodicity for sending the information indicative of the monitoring to the LMF and wherein the information indicative of the monitoring is sent to the LMF based on the periodicity;
- a number of transmit receive points to use at the user equipment while monitoring the performance of the at least one of: the machine learning model or the machine learning functionality; or
- a type of positioning model to be used by the user equipment while monitoring the performance of the at least one of: the machine learning model or the machine learning functionality or
- UE's internal conditions (e.g. memory, battery, and other hardware limitations) for AI/ML positioning.

While the UE is in an RRC-INACTIVE state, the UE performs functionality monitoring as configured by the LMF. Once the outcome(s)of the monitoring are collected, the outcome(s) may be stamped with the timestamp of the DL-PRS instance and the functionality ID. The (optionally stamped) outcome(s) may then be reported to LMF via UL SDT. The outcome reported for UE based positioning and UE assisted positioning may be different. For UE based positioning, the reporting is required only when there is deviation from the expected outcome of the functionality/model inference (i.e. positioning co-ordinates). Whereas the reporting for UE assisted positioning will have information from multiple TRPs.

Herein, an ML model may be referred as AI/ML model or Al model.

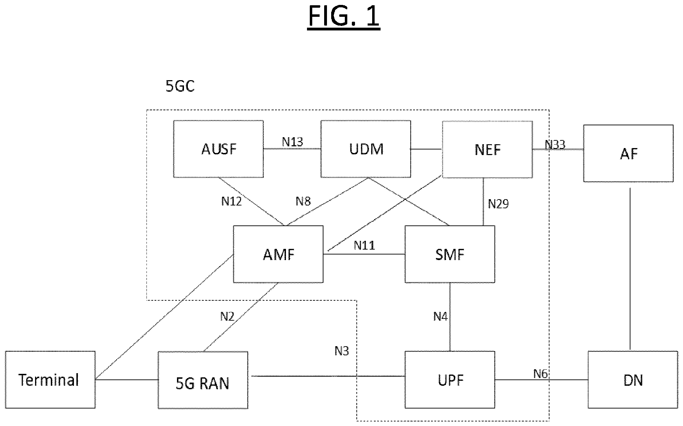

In the following various example embodiments are explained with reference to communication devices (e.g., UEs) that are capable of communication with a communications network. Before explaining in detail the embodiments of the methods and apparatuses of the present disclosure, a communications network comprising a 5^{th} generation communication system (5GS), a radio access network and a core network (5GC) thereof, are briefly explained with reference to FIG. 1.

FIG. 1 shows a schematic representation of a communications network comprising a cellular or mobile communication system (e.g., a 5G communication system (5GS), and data network. The 5GS may comprise a radio access network such as a 5G radio access network (5G-RAN) or next generation radio access network (NG-RAN), a 5G core network (5GC). An application function may be deployed in the 5GS as trusted application function or may be deployed or hosted on one or more application servers of the data network. Such application functions are untrusted application functions. The 5GS connects a UE to a data network via the access network and the 5GC (e.g., a UPF of the 5GC).

The 5GC may comprise the following network functions: Network Slice Selection Function (NSSF); Network Exposure Function; Network Repository Function (NRF); Policy Control Function (PCF); UDM; Application Function (AF); Authentication Server Function (AUSF); an AMF; and Session Management Function (SMF), and a user plane function (UPF). FIG. 1 also shows the various interfaces (N1, N2 etc.) that may be implemented between the various elements of the system.

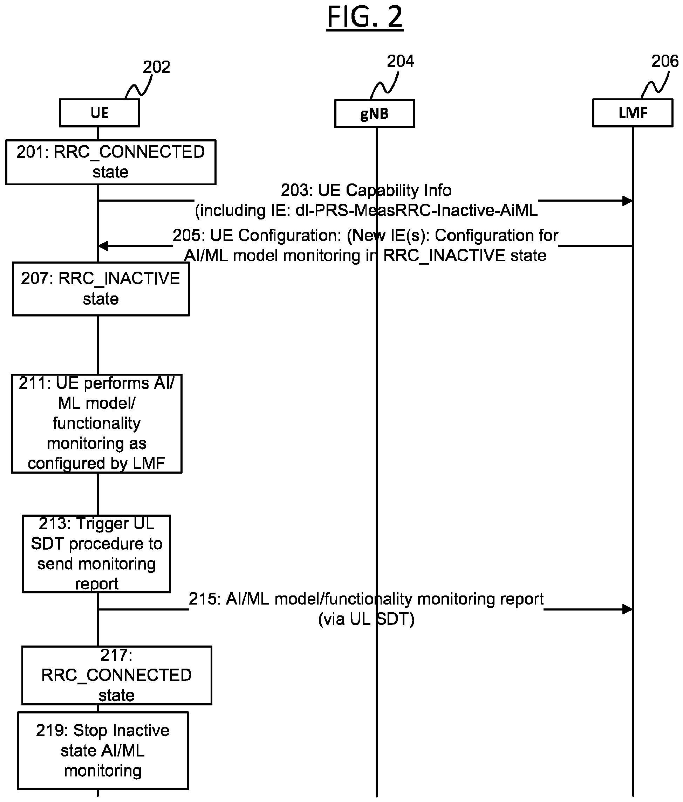

FIG. 2 shows an example message flow between a UE202, RAN node 204 (in this example a gNB, but any suitable base station may be used) and a network entity 206 (in this example, an LMF, but other suitable network entities may be used).

At 201, UE 202 is in an RRC_CONNECTED state. At 203, UE 202 sends (while still in the RRC_CONNECTED state), capability information indicating the support for DL PRS measurement/ monitoring for Al/ML positioning in RRC_INACTIVE state. In some examples, this capability information may be sent in addition to a capability indication for RRC_INACTIVE state DL PRS reporting. The message sent at 203 may be sent via an LPP message to LMF 206.

The capability information sent at 203 may comprise an indication that UE 202 is capable to perform DL PRS measurement collection, run an AI/ML model related to a functionality, obtain an outcome of running the AI/ML model (information indicative of the monitoring). In some examples, UE 202 may also indicate that it is capable of assessing the outcome of running the AI/ML model against one or more conditions configured by the MW (e.g., LMF 206).

At 205, while UE 202 is still in an RRC_CONNECTED state, LMF 206 may send the configuration to UE 202 to facilitate AI/ML model/functionality monitoring in RRC_ONACTICE state. Example parameters that may be included in the configuration are:
- Model identifier(s)/ functionality identifier(s) to be monitored;
- PRS instances to be used for monitoring;
- Maximum observation window for collecting DL-PRS for functionality monitoring;
- Periodicity in case of periodic reporting or the conditions for aperiodic reporting;
- Conditions list to test the outcome of running the functionality selected for monitoring. Such conditions may refer to an NW selected threshold, or to a comparison of the current outcome and any other past outcome;
- The model/ functionality configuration (like number of TRPs, the positioning method to be used etc.,) for each functionality/ model that needs to be monitored in RRC_INACTIVE state;
- Conditions for reporting (i.e. the outcome reported for UE based positioning and UE assisted positioning may be different. For UE based positioning, the reporting may be performed there is deviation from the expected outcome of the functionality/model inference (i.e. positioning co-ordinates). Whereas the reporting for UE assisted positioning may be done on a periodic or an aperiodic basis (based on the LMF configuration).

At 207, UE 202 moves to an RRC_INACTIVE sate. UE 202 may then start AI/ML model monitoring measurements at 211 based on the LMF configuration. Information indicative of the monitoring ("Outcome(s)") may be sent to LMF 206 at 213. The outcome(s) may be stamped with the timestamps of the DL-PRS instance and functionality identification by UE 202. The outcome(s) may comprise a monitoring metric for LMF 206 to determine whether the performance of the AI/ML model is below (or in some examples, equal to or below) a threshold level and needs to be reconfigured. If so, the AI/ML model may be reconfigured. In other examples, the UE may determine as an outcome(s) that the performance of the AI/ML model is below a threshold level and report the outcome(s) to LMF 206.

At 213, UE 202 triggers an UL SDT procedure to send a monitoring report with the outcome(s) of the monitoring to LMF 206. The procedure may be triggered based on the configuration received form LMF 206.

At 215, UW 202 sends a monitoring report including the outcome(s) to LMF 206. The length of the report may be less that the maximum allowed message length for UL SDT and may be sent via UL SDT.

At 217, UE 202 may move to an RRC_CONNECTED or RRC_IDLE state. At 219, the AI/ML model measurements/ monitoring configured for RRC_INACTIVE state may be stopped. If the measurement/monitoring was ongoing when the state transition is triggered, UE 202 may send the report if possible or else abort the RRC_INACTIVE reporting procedure.

According to some examples, the outcome(s) may be used to train a second machine learning model (e.g., at the NW side or UE-side).

AI/ML models used herein may use input information based on received DL-PRS measurements at UE 202. UE 202 may pre-process the DL-PRS signals before inputting into the model. For example, Channel Impulse Response (CIR) or DP/PDP (Delay Profiles per path), etc. may be derived from multiple Transmission Reception Points (TRPs) of DL PRS signals without using the ML model. This information may then be input into the AI/MNL model. The model output may be Line of Sight (LOS) or Non Line of Sight (NLOS), RSTD (time difference of the received PRS signals from different TRPs) etc., which may be sent to LMF 206 as outcome(s) so that the LMF can determine if the AI/ML model performance is above or below a threshold, or these output(s) may be assessed against threshold levels configured by LMF 206 at UE 202 to determine if the AI/ML model performance is above or below a threshold.

In UE based monitoring, UE 202 may perform monitoring as configured by LMF 206. LMF 206 may provide ground truth (i.e. reference information) and the thresholds to UE 202. Hence UE side model will perform the positioning measurement (based on the received DL PRS signal). The model output may be compared with the ground truth information provided by LMF 206 and if it is beyond the specified threshold UE 202 may take action as indicated by LMF206. For drift monitoring, the model input may be compared with the training data. If there is a large deviation when compared to training data, it is evident that output will also be deviating from the expected outcome, hence if the deviation is beyond a threshold, UE 202 may take action as indicated by LMF 206.

In UE assisted monitoring, UE 202 performs the positioning measurement and reports the specified monitoring metric to LMF 206. LMF 206 may then assess the performance of the AI/ML model. action based on the UE reported monitoring metric.

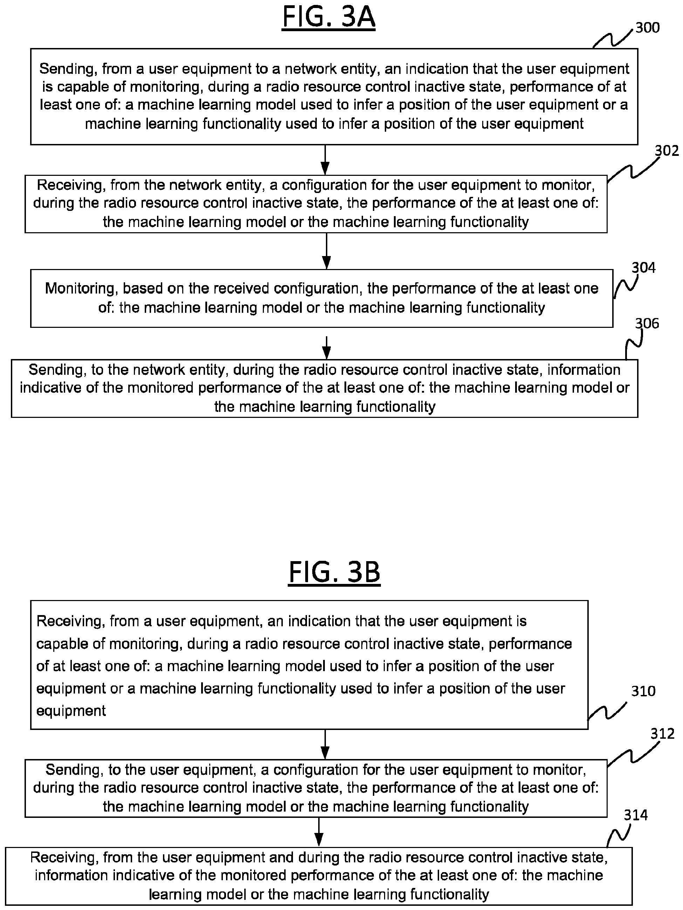

FIG. 3A shows an example method flow. The method may be performed by a UE such as UE 202, for example.

At 300, the method comprises sending, from a user equipment to a network entity, an indication that the user equipment is capable of monitoring, during a radio resource control inactive state, performance of at least one of: a machine learning model used to infer a position of the user equipment, or a machine learning functionality used to infer a position of the user equipment

At 302, the method comprises receiving, from the network entity, a configuration for the user equipment to monitor, during the radio resource control inactive state, the performance of the at least one of: the machine learning model or the machine learning functionality.

At 304, the method comprises monitoring, based on the received configuration, the performance of the at least one of: the machine learning model or the machine learning functionality.

At 306, the method comprises sending, to the network entity, during the radio resource control inactive state, information indicative of the monitored performance of the at least one of: the machine learning model or the machine learning functionality.

FIG. 3B shows an example method flow. The method may be performed by network entity. According to some examples the network entity may provide a location function for at least part of a network. According to some examples, the network entity may comprise an LMF, such as LMF 206, for example.

At 310, the method comprises receiving from a user equipment, an indication that the user equipment is capable of monitoring, during a radio resource control inactive state, performance of at least one of: a machine learning model used to infer a position of the user equipment, or a machine learning functionality used to infer a position of the user equipment.

At 312, the method comprises sending to the user equipment, a configuration for the user equipment to monitor, during the radio resource control inactive state, the performance of the at least one of: the machine learning model or the machine learning functionality.

At 314, the method comprises receiving, from the user equipment and during the radio resource control inactive state, information indicative of the monitored performance of the at least one of: the machine learning model or the machine learning functionality.

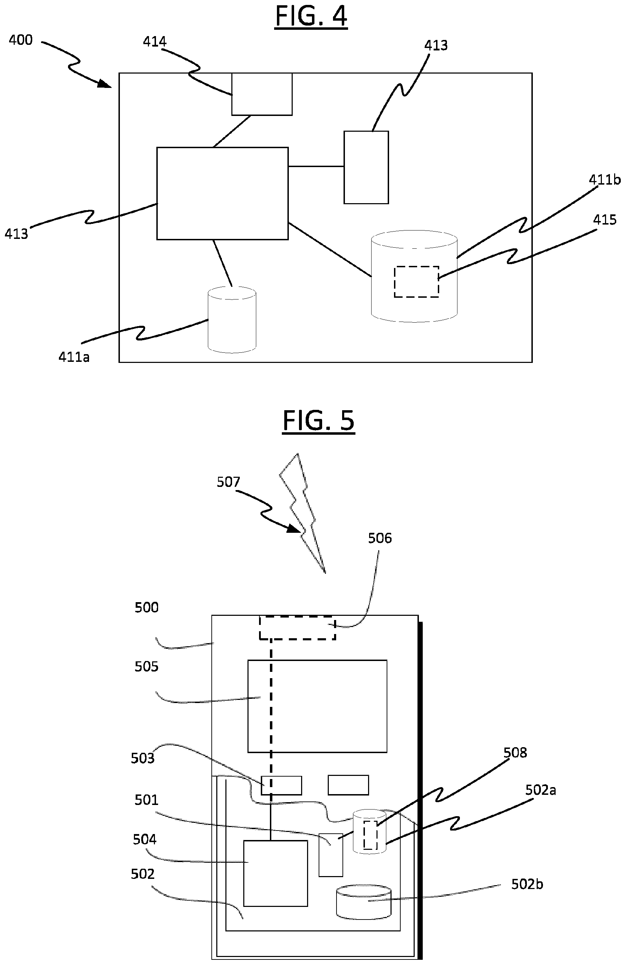

FIG. 4 illustrates an example of an apparatus 400 implementing an element of the communication network illustrated on FIG. 1. According to some examples, apparatus 400 may implement an LMF. The apparatus 400 may comprise at least one random access memory (RAM) 411a, at least on read only memory (ROM) 411b, at least one processor 412, 413 and a network interface 414. The at least one processor 412, 413 may be coupled to the RAM 411a and the ROM 411b. The at least one processor 412, 413 may be configured to execute an appropriate software code 415 of the network entities described herein. Execution of the software code 415 of the network entities described herein (or execution of instructions of the software code 415) may for example may cause the apparatus to perform the method shown in FIG. 3B. The software code 415 may be stored in the ROM 411b. The apparatus 400 may be interconnected with another apparatus 400 for controlling other network functions of the 5GC. In some embodiments, one or more network functions of the 5GC is deployed or hosted on an apparatus 400. In alternative embodiments, the apparatus may include software code of additional network functions of the core network of the communication network. The apparatus 400 may comprise a computing device (e.g., a server), a computing system, such as a distributed computing system, or a virtual machine provided by a cloud computing system. In some examples, the apparatus 400 may comprise a cloud computing system (e.g., a cloud core network) that comprises the session management function, and other network functions of the core network shown in FIG. 1.

FIG. 5 illustrates an example of a communication device 500, such as the terminal illustrated on FIG. 1. The communication device 500 may be provided by any device capable of sending and receiving radio signals. Non-limiting examples of a communication device 500 comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The communication device 500 may comprise a transceiver for transmitting and/or receiving, for example, wireless signals carrying communications, for example radio signals. The communications may be one or more of voice, electronic mail (email), text messages, multimedia data, machine data and so on.

The communication device 500 may receive wireless signals (e.g., radio signals) over an air or radio interface 507 via appropriate apparatus for receiving and may transmit wireless signals via appropriate apparatus for transmitting radio signals. In FIG. 5 transceiver is designated schematically by block 506. The transceiver 506 may comprise, for example, a radio part and associated antenna arrangement. The antenna arrangement may be arranged internally or externally to the mobile device and may comprise one or more antenna elements. The antenna arrangement may be a multi-input multi output (MIMO) antenna.

The communication device 500 may be provided with at least one processor 501, at least one memory ROM 502a, at least one RAM 502b and other possible components 503 for use in software and hardware aided execution of tasks it is configured to perform, including control of access to and communications with radio access networks (e.g., the 5G-RAN or NG-RAN illustrated in FIG. 1) and other communication devices. The at least one processor 501 is coupled to the RAM 502b and the ROM 502a. The at least one processor 501 may be configured to execute an appropriate software code 508 (e.g., the at least one processor may execute instructions of the software code 508). The execution of the software code 508 may for example allow the communication device to perform one or more operations, including the operations described herein. The software code 508 may be stored in the ROM 502a.

The processor, the ROM, and the RAM, the transceiver and other circuitry of the communication device (e.g., a modem) can be provided on a circuit board, in chipsets, or in a system on chip. The circuit board, chipsets or system on chip is denoted by reference 504. The communication device 500 may optionally have a user interface such as key pad 505, touch sensitive screen or pad, combinations thereof or the like. Optionally one or more of a display, a speaker and a microphone may be provided depending on the type of communication device.

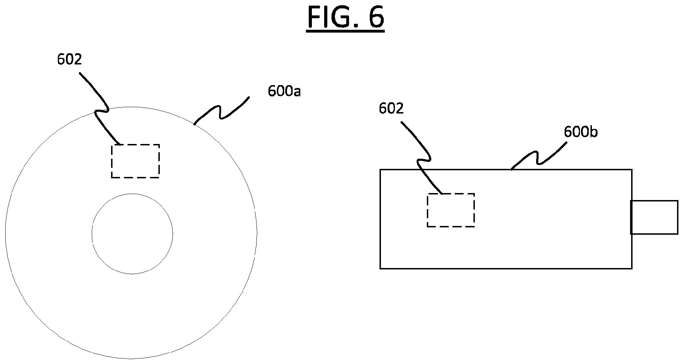

FIG. 6 shows a schematic representation of non-volatile memory media 600a (e.g. computer disc (CD) or digital versatile disc (DVD)) and 600b (e.g. universal serial bus (USB) memory stick) storing instructions and/or parameters 602 which when executed by a processor allow the processor to perform one or more of the steps of any method flow described herein.

It is understood that references in the above to various network functions (e.g., to an AMF, an AF, a PCF, an LMF etc.) may comprise apparatus that perform at least some of the functionality associated with those network functions. Further, an apparatus comprising a network function may comprise a virtual network function instance of that network function.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes various example embodiments, there are several variations and modifications which may be made to the various example embodiments without departing from the scope of this disclosure.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of the term "means" herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the accompanying drawings and the claims. However, all such and similar modifications of the teachings will still fall within the various example embodiments of the disclosure as set forth in the claims. By way of non-limiting and illustrative example, there is a further example embodiment comprising a combination of one or more example embodiments with any of the other example embodiments previously discussed.

## Claims

1. A user equipment comprising:
means for sending, to a network entity, an indication that the user equipment is capable of monitoring, during a radio resource control inactive state, performance of at least one of: a machine learning model used to infer a position of the user equipment or a machine learning functionality used to infer a position of the user equipment;
means for receiving, from the network entity, a configuration for the user equipment to monitor, during the radio resource control inactive state, the performance of the at least one of: the machine learning model or the machine learning functionality;
means for monitoring, based on the received configuration, the performance of the at least one of: the machine learning model or the machine learning functionality;
means for sending, to the network entity, during the radio resource control inactive state, information indicative of the monitored performance of the at least one of: the machine learning model or the machine learning functionality.

2. A user equipment according to claim 1, wherein the information indicative of the monitoring is sent to the network entity using a small data transmission procedure.

3. A user equipment according to claim 1 or claim 2, wherein the information indicative of the monitoring comprises at least one of:
an indication that the performance of the at least one of: the machine learning model or the machine learning functionality is below a threshold level; or
an indication that at least one input and a training data set for the at least one of the machine learning model or the machine learning functionality have a deviation level above a threshold deviation level.

4. A user equipment according to claim 1 or claim 2, wherein the information indicative of the monitoring comprises a monitoring metric for determining, at the network entity, whether the performance of the at least one of: the machine learning model or the machine learning functionality is above or below a threshold level.

5. A user equipment according to claim 4, wherein the configuration comprises a periodicity for sending the information indicative of the monitoring to the network entity, and wherein the information indicative of the monitoring is sent to the network entity based on the periodicity.

6. A user equipment according to any preceding claim, wherein the means for monitoring the performance of the at least one of: the machine learning model or the machine learning functionality comprises:
means for measuring at least one downlink positioning reference signal, PRS, to generate at least one positioning measurement of the user equipment;
means for comparing an output of the at least one of: the machine learning model or the machine learning functionality to the at least positioning measurement of the user equipment to determine the information indicative of the monitoring.

7. A user equipment according to claim 6, wherein the configuration comprises at least one of:
a time window for measuring the at least one downlink PRS; or
one or more identifiers of the at least one downlink PRS.

8. A user equipment according to any preceding claim, wherein the configuration comprises at least one of:
at least one identifier of the at least one of: the machine learning model or the machine learning functionality to be monitored;
at least one condition for determining an outcome for the monitoring.

9. A user equipment according to any preceding claim, wherein the configuration comprises at least one of:
a number of transmit receive points to use at the user equipment while monitoring the performance of the at least one of: the machine learning model or the machine learning functionality; or
a type of positioning model to be used by the user equipment while monitoring the performance of the at least one of: the machine learning model or the machine learning functionality.

10. A user equipment according to any preceding claim, wherein the configuration comprises:
an indication of a periodicity for sending the information indicative of the monitoring;
an indication to send the information indicative of the monitoring in response to the performance of the at least one of: the machine learning model or the machine learning functionality is below a threshold level; or
an indication to send the information indicative of the monitoring in response to the performance of the at least one of: the machine learning model or the machine learning functionality is above a threshold level.

11. A user equipment according to any preceding claim, wherein the information indicative of the monitored performance is sent in a message, wherein the message is shorter than or equal to the maximum allowed message length for uplink small data transmission.

12. A user equipment according to any preceding claim, wherein the information indicative of the monitored performance of the at least one of the machine learning model or the machine learning functionality comprises at least one of:
a timestamp of a downlink positioning reference signal, PRS; or
a downlink PRS with a corresponding functionality identifier.

13. A user equipment according to any preceding claim, wherein the information indicative of the monitored performance is used to train a second machine learning model.

14. A method comprising:
sending, from a user equipment to a network entity, an indication that the user equipment is capable of monitoring, during a radio resource control inactive state, performance of at least one of: a machine learning model used to infer a position of the user equipment or a machine learning functionality used to infer a position of the user equipment;
receiving, from the network entity, a configuration for the user equipment to monitor, during the radio resource control inactive state, the performance of the at least one of: the machine learning model or the machine learning functionality;
monitoring, based on the received configuration, the performance of the at least one of: the machine learning model or the machine learning functionality;
sending, to the network entity, during the radio resource control inactive state, information indicative of the monitored performance of the at least one of: the machine learning model or the machine learning functionality.

15. An apparatus comprising:
means for receiving, from a user equipment, an indication that the user equipment is capable of monitoring, during a radio resource control inactive state, performance of at least one of: a machine learning model used to infer a position of the user equipment or a machine learning functionality used to infer a position of the user equipment;
means for sending, to the user equipment, a configuration for the user equipment to monitor, during the radio resource control inactive state, the performance of the at least one of: the machine learning model or the machine learning functionality;
means for receiving, from the user equipment and during the radio resource control inactive state, information indicative of the monitored performance of the at least one of: the machine learning model or the machine learning functionality.
